(19)

Europäisches Patentamt

European Patent Office

Office européen des brevets

(11) **EP 3 001 624 A1**

(12) **EUROPEAN PATENT APPLICATION**

(43) Date of publication:
**30.03.2016 Bulletin 2016/13**

(51) Int Cl.:
*H04L 25/03* (2006.01)     *H04L 27/26* (2006.01)

(21) Application number: **14306514.2**

(22) Date of filing: **29.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Wild, Thorsten**
  **70435 Stuttgart (DE)**
• **Schaich, Frank**
  **70435 Stuttgart (DE)**

(74) Representative: **2SPL Patentanwälte PartG mbB**
**Landaubogen 3**
**81373 München (DE)**

(54) **Choice of fourier transformation size, filter length and guard time in universal filtered multicarrier**

(57)     The embodiments of the invention relate to a method (MET) for generating a multicarrier signal by a transmitter apparatus. The method (MET) contains composing (MET-S4) the multicarrier signal comprising a first plurality of subcarriers carrying first data and at least one second plurality of subcarriers carrying at least second data. The method further contains modulating (MET-S5) the first plurality of subcarriers according to a first parameter set for obtaining a first time signal (TS1) by applying (MET-S5-1) a first discrete Fourier transformation having a first size, by filtering (MET-S5-2) using a first filter module having a first filter length, and by adapting (MET-S5-3) a first guard time at a beginning of the first time signal and at an end of the first time signal, and modulating (MET-S6) the at least one second plurality of subcarriers according to at least one second parameter set for obtaining at least one second time signal (TS2) by applying (MET-S6-1) at least one second discrete Fourier transformation having at least one second size, by filtering (MET-S6-2) using at least one second filter module having at least one second filter length, and by adapting (MET-S6-3) at least one second guard time at a beginning of the at least one second time signal and at an end of the at least one second time signal. The embodiments further relate to a transmitter apparatus for generating a multicarrier signal.

FIG. 1

EP 3 001 624 A1

**Description**

**FIELD OF THE INVENTION**

The present invention relates to controlling transmission error sensitivity of a multicarrier signal and, more particularly but not exclusively, to control the transmission error sensitivity with respect to synchronization capabilities of a transmitter apparatus for transmitting a universal filtered multicarrier signal.

**BACKGROUND**

This section introduces aspects that may be helpful in facilitating a better understanding of the invention. Accordingly, the statements of this section are to be read in this light and are not to be understood as admission about what is in the prior art.

In future 5G wireless systems (5G = Fifth Generation) it is envisaged to relax synchronicity (in terms of time and frequency) between terminals such as mobile stations or so-called low-end sensor devices and a base station in uplink direction in order to reduce signaling overhead and device battery consumption as well as to support low cost devices with cheap oscillators. This provides the advantage that especially small packet messages can be transmitted more efficiently than with strict synchronicity implying bulky random access procedures and closed-loop timing advance control.

Conventional OFDM radio frequency signals cannot be used for such applications with relaxed synchronicity because it is known to be sensitive against time-frequency misalignments. Therefore, 5G wireless systems may use a new waveform which is called UFMC (UFMC = Universal Filtered Multi Carrier). UFMC is described for example in Schaich, F.; Wild, T.; Chen, Y.; "Waveform contenders for 5G - suitability for short packet and low latency transmissions," in proceedings of IEEE Veh. Technol. Conf. Spring (VTC'14 Spring), May 2014 or in Wild, T.; Schaich, F.; Chen, Y.; "5G Air Interface Design based on Universal Filtered (UF-)OFDM," in proceedings of DSP14, Hongkong, August 2014. Even if UFMC will be applied in 5G wireless systems, the relaxed synchronicity may have an impact on a error-free reception especially of small control channel resource elements (like in the LTE PUCCH) for carrying small control feedback information such as ACK/NACK (ACK = Acknowledgement, NACK = Non-Acknowledgement) for HARQ (HARQ = Hybrid Automatic Repeat Request), CQI (CQI = channel quality indicator) or PMI (PMI = precoding matrix indicator) for feeding back channel states.

When the waveform parameter setting is now designed for the needs of supporting robust transmission of the small control channel resource elements, it wastes spectral efficiency. Conversely, if the waveform parameters are set for efficient data transmission, the small control channel resource elements may lack robustness against ICI (ICI = inter-carrier-interference) and ISI (ISI = inter-symbol-interference). This is because so-called time-frequency chunks for transmission of user data are large (e.g. 12 subcarriers x 14 multi-carrier symbols) against time-frequency chunks for transmission of control data (e.g. 4 subcarriers x 2 multi-carrier symbols). Thus any distortions due to relaxed synchronicity, which are just impacting a few edge symbols of the user data may harm all symbols of the control data.

**SUMMARY**

An object of the embodiments of the invention is to find a solution for controlling transmission error sensitivity of a universal filtered multicarrier signal for example in case of applying a radio transmitter apparatus with a relaxed synchronicity.

The object is achieved by a method for generating a multicarrier signal by a transmitter apparatus. The method contains composing the multicarrier signal comprising a first plurality of subcarriers carrying first data and at least one second plurality of subcarriers carrying at least second data. The method further contains modulating the first plurality of subcarriers according to a first parameter set for obtaining a first time signal by applying a first discrete Fourier transformation having a first size, by filtering using a first filter module having a first filter length, and by adapting a first guard time at a beginning of the first time signal and at an end of the first time signal. The method even further contains modulating the at least one second plurality of subcarriers according to at least one second parameter set for obtaining at least one second time signal by applying at least one second discrete Fourier transformation having at least one second size, by filtering using at least one second filter module having at least one second filter length, and by adapting at least one second guard time at a beginning of the at least one second time signal and at an end of the at least one second time signal. Preferably, the multicarrier signal is a universal filtered multicarrier signal (UFMC) or a filter bank multicarrier signal (FBMC).

The object is further achieved by a transmitter apparatus for generating a multicarrier signal. The transmitter apparatus contains a composer module which is configured to compose the multicarrier signal which contains a first plurality of subcarriers carrying first data and which contains at least one second plurality of subcarriers carrying at least second data. The transmitter apparatus further contains a first modulator module which is configured to modulate the first plurality of subcarriers according to a first parameter set for obtaining a first time signal by applying a first discrete Fourier transformation having a first size, by filtering using a first filter module having a first filter length, and by adapting a first guard time at a beginning of the first time signal and at an end of the first time signal. The transmitter apparatus even further contains at least one second modulator module which is configured to modulate the at least one second plurality of subcarriers according to at least one second parameter set for obtaining at least one second time signal by applying at least one second discrete Fourier transformation having at least one second size, by filtering using at least one second filter module having at least one second filter length, and by adapting at least one second guard time at a beginning of the at least one second time signal and at an end of the at least one second time signal.

With respect to two alternative embodiments, either the first discrete Fourier transformation is applied before the filtering by the first filter module and said at least one second discrete Fourier transformation is applied before the filtering by the at least one second filter module or the first discrete Fourier transformation is applied after the filtering by the first filter module and the at least one second discrete Fourier transformation is applied after the filtering by the at least one second filter module.

The embodiments provide a solution how various time signals of the multicarrier signal can be adapted to an overall transmission error requirement of the multicarrier signal or to a first transmission error requirement with respect to the first time signal and to at least one second transmission error requirement with respect to the at least one second time signal.

According to various embodiments, a selection of the first parameter set and/or a selection of the at least one second parameter set may depend on at least one of following operating conditions: a synchronization precision of the transmitter apparatus, a transmission performance of a radio link from the transmitter apparatus to a receiver apparatus which is configured to receive the multicarrier signal, a velocity between the transmitter apparatus and the receiver apparatus, a proportion between a size of first transmission resources for transmitting the first data and a size of at least second transmission resources for transmitting the at least second data, a time delay spread between a first propagation path of the multicarrier signal from the transmitter apparatus to the receiver apparatus and at least one second propagation path of the multicarrier signal from the transmitter apparatus to the receiver apparatus. The embodiments provide for example a solution for transmitter apparatuses with relaxed synchronicity which may be part of low cost devices such as IoT devices (IoT = Internet of Things) for transmitting a multicarrier signal in a more robust way than transmitted by conventional high precision transmitter apparatuses which are part of conventional base stations or conventional mobile stations.

With respect to further various embodiments, a robustness of the first time signal against transmission errors and/or a robustness of the at least one second time signal against transmission errors is increased, when at least one of following conditions is fulfilled: the synchronization precision of the transmitter apparatus is below a predefined time synchronization precision or below a predefined frequency synchronization precision, the transmission performance of the radio link is below a predefined transmission performance, the velocity of the transmitter apparatus is above a predefined velocity, the size of the first transmission resources is below a predefined size of transmission resources, the proportion between the size of first transmission resources for transmitting the first data and the size of the at least second transmission resources for transmitting the at least second data is above a predefined proportion, the time delay spread is above a predefined time delay spread. These conditions are indicating when the robustness of one or several groups of subcarriers of the multicarrier signal may be increased. Thereby, the spectral efficiency may be for example only reduced for those transmitter apparatuses which have a reduced time synchronization precision and/or frequency synchronization precision.

Preferably, the first size of the first discrete Fourier transformation is given by a first predefined integer number, the first filter length is given by a first predefined plurality of filter coefficients, the first guard time is given by a first predefined number of zero-amplitude samples inserted at a beginning of the first time signal and an end of the first time signal, the at least second size of the at least one second discrete Fourier transformation is given by at least one second predefined integer number, the at least one second filter length is given by at least one second predefined plurality of filter coefficients, the at least one second guard time is given by at least one second predefined number of zero-amplitude samples inserted at a beginning of the at least one second time signal and an end of the at least one second time signal.

According to a further embodiment, at least one of the first size of the first discrete Fourier transformation and of the at least one second size of the at least one second discrete Fourier transformation is set to a first Fourier transformation value $N_1$, at least one of the first filter length and of the at least one second filter length is set to a first filter length value $L_1$ and at least one of the first guard time and of the at least one second guard time is equal to half of a first guard time value $A_1$ when a velocity of the transmitter apparatus is below a predefined value or the at least one of the first size of the first discrete Fourier transformation and of the at least one second size of the at least one second discrete Fourier transformation is set to a second Fourier transformation value $N_2$ being a fraction of the first Fourier transformation value, the at least one of the first filter length and of the at least one second filter length is set to a second filter length value $L_2$ being a fraction of the first filter length value and the at least one of the first guard time and of the at least one second guard time is equal to half of a second guard time value $A_2$, when the velocity of the transmitter apparatus is equal to or above the predefined value. Preferably, the first Fourier transformation value $N_1$, the first filter length value $L_1$, the first guard time value $A_1$, the at least one second Fourier transformation value $N_2$, the at least one second filter length value $L_2$, and the at least one second guard time value $A_2$ fulfill equation $0.5 \cdot (N_1 + L_1 + A_1) = N_2 + L_2 + A_2$.

In such a case, robustness against transmission errors in case of a high velocity of the transmitter apparatus and resulting carrier frequency offset is increased by keeping transmission efficiency at the cost of robustness against delay spread and timing offset. The robustness can be increased, because the pilot distance in time is reduced and thereby more pilots per time unit can be used for channel estimation at the receiver apparatus.

With respect to an even further embodiment, the first parameter set and the at least one second parameter set are selected to generate the at least one second time signal being less sensitive with respect to transmission errors than the first time signal. This allows to generate a heterogeneous waveform structure for the multicarrier signal which contains at least two groups of subcarriers which are protected with different levels against transmission errors. Thereby, the invention can be applied to upcoming 5G air interfaces which may support a sub-bandwise modulation with different subcarrier spacings within the sub-bands.

According to a further embodiment, the first data may be user data and the at least second data may be control data. The control data may be for example uplink feedback information such as ACK/NACK, CQI or PMI of a radio link between the transmitter apparatus and the receiver apparatus. This allows adapting the processing parameters for generating the first time signal and the at least one second time signal to the demands of robustness which may be higher for the control data than for the user data. Thereby, the control data can be received error-free with a higher probability than the user data at a cost of giving up a small fraction of transmission efficiency and spectral efficiency for user data transmission can be kept at a same level as achievable without the embodiments of the invention.

With respect to an even further embodiment, the first size of the first discrete Fourier transformation is set to a first Fourier transformation value $N_1$, the first filter length is set to a first filter length value $L_1$, the first guard time is equal to half of a first guard time value $A_1$, the at least one second size of the at least one second discrete Fourier transformation is set to a second Fourier transformation value $N_2$ smaller than the first Fourier transformation value $N_1$, the at least one second filter length is set to a second filter length value $L_2$ larger than the first filter length value $L_1$, the at least one second guard time is equal to half of at least one second guard time value $A_2$ larger than the first guard time value $A_1$, and the first Fourier transformation value $N_1$, the first filter length value $L_1$, the first guard time value $A_1$, the at least one second Fourier transformation value $N_2$, the at least one second filter length value $L_2$, and the at least one second guard time value $A_2$ fulfill equation $N_1 + L_1 + A_1 = N_2 + L_2 + A_2$, when a difference between a size of first transmission resources for transmitting the first data and a size of second transmission resources for transmitting the at least second data is above a predefined difference value. This embodiment may be used for example, when a small amount of control data is transmitted simultaneously with a huge amount of user data.

In a further embodiment, the size of the first discrete Fourier transformation is set to a first Fourier transformation value $N_1$, the first filter length is set to a first filter length value $L_1$, the first guard time is equal to half of a first guard time value $A_1$, the at least one second size of the at least one second discrete Fourier transformation is set to at least one second Fourier transformation value $N_2$ smaller than the first Fourier transformation value $N_1$, the at least one second filter length is set to at least one second filter length value $L_2$ larger than the first filter length value $L_1$, the second guard time is equal to half of at least one second guard time value $A_2$ larger than the first guard time value $A_1$, and the first Fourier transformation value $N_1$, the first filter value $L_1$, the first guard time value $A_1$, the at least one second Fourier transformation value $N_2$, the at least one second filter length value $L_2$, and the at least one second guard time value $A_2$ fulfill equation $N_1 + L_1 + A_1 = N_2 + L_2 + A_2$, when the difference between the size of the first transmission resources for transmitting the first data and the size of the second transmission resources for transmitting the at least second data is equal to or below the predefined difference value. This further embodiment may be used for example, when a same or similar amount of control data and user data have to be transmitted simultaneously. Thereby, robustness with respect to transmission errors for the control data is larger than for the user data and transmission efficiency for the user data is kept at a high level.

According to an even further preferred embodiment, the first size of the first discrete Fourier transformation and the at least one second size of the at least one second discrete Fourier transformation are selected in such a way that a single fast Fourier transformation on received signals of the first time signal and the at least one second time signal can be performed by the receiver apparatus which is configured to receive the multicarrier signal. Preferably, the first Fourier transformation value $N_1$, the at least one second Fourier transformation value $N_2$, a first integer w, a second integer x, a third integer y, and a fourth integer z fulfill equation $w \cdot N_1 = x \cdot N_2 = y \cdot 2^z$. This embodiment provides the advantage of enabling an efficient FFT implementation (FFT = Fast Fourier Transformation) at the radio receiver apparatus by applying a single FFT for a joint detection of the first plurality of subcarriers (carrying the first data such as user data) and of the at least one second plurality of subcarriers (carrying the at least second data such as control data).

With respect to a further preferred embodiment, the composing of the multicarrier signal composes the second plurality of subcarriers by blanking a first number of the second plurality of subcarriers having a smallest subcarrier index and by blanking a second number of the second plurality of subcarriers having a largest subcarrier index. Thereby, a transmission of the second data can be further protected against inter-carrier interference.

Further advantageous features of the embodiments of the invention are defined in the dependent claims and are described in the following detailed description.

BRIEF DESCRIPTION OF THE FIGURES

The embodiments of the invention will become apparent in the following detailed description and will be illustrated by accompanying figures given by way of non-limiting illustrations.

Figure 1 shows schematically a flow diagram of a method for controlling transmission error sensitivity of a universal filtered multicarrier signal according to the embodiments of the invention.

Figure 2 a) shows a physical resource block allocation in frequency and time for a symbol of the universal filtered multicarrier signal according to a first exemplarily embodiment of the invention and

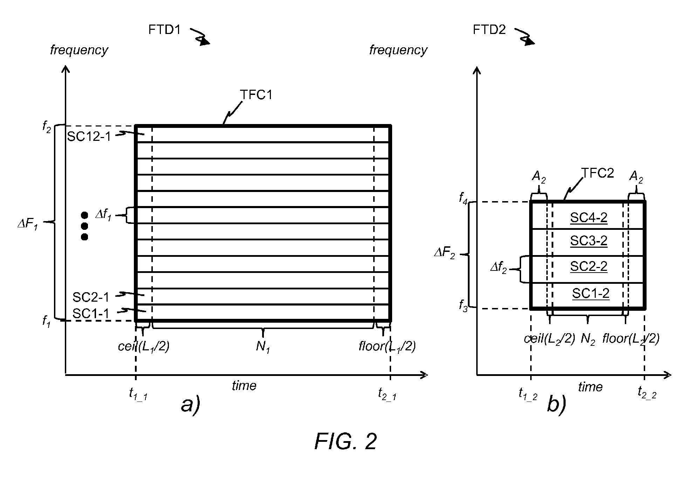

Figure 2 b) shows a further physical resource block allocation in frequency and time for a further symbol of the universal filtered multicarrier signal according to a second exemplarily embodiment of the invention.

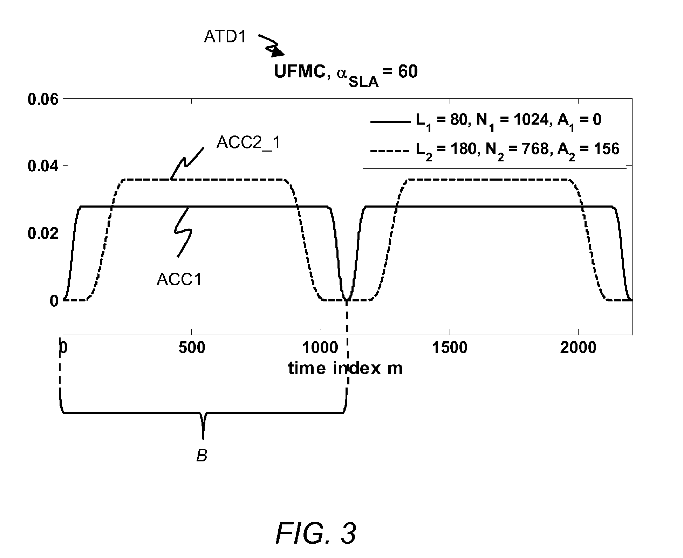

Figure 3 shows amplitude values in arbitrary units of multi-carrier symbols of the universal filtered multicarrier signal as a function of time in arbitrary units for a first time signal which carries first data according to a first parameter setting and for a second time signal which carries second data according to a second parameter setting for controlling transmission error sensitivity of the universal filtered multicarrier signal.

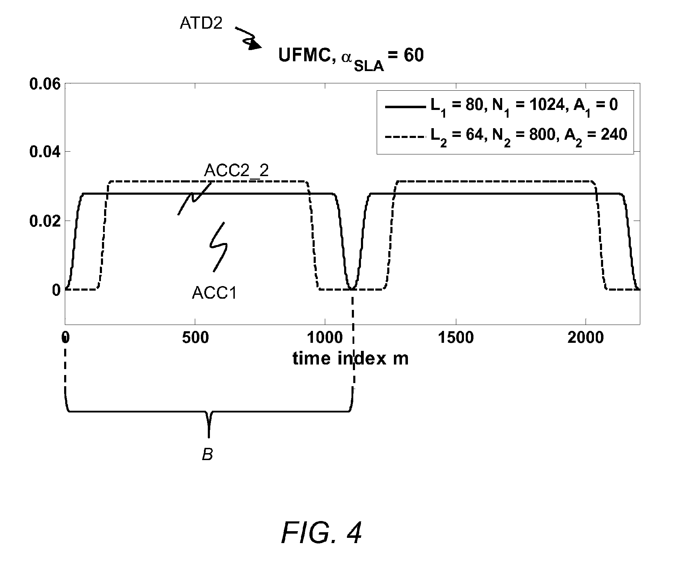

Figure 4 shows amplitude values in arbitrary units of multi-carrier symbols of the universal filtered multicarrier signal as a function of time in arbitrary units for the first time signal and for a further second time signal which carries second data according to a third parameter setting for controlling transmission error sensitivity of the universal filtered multicarrier signal.

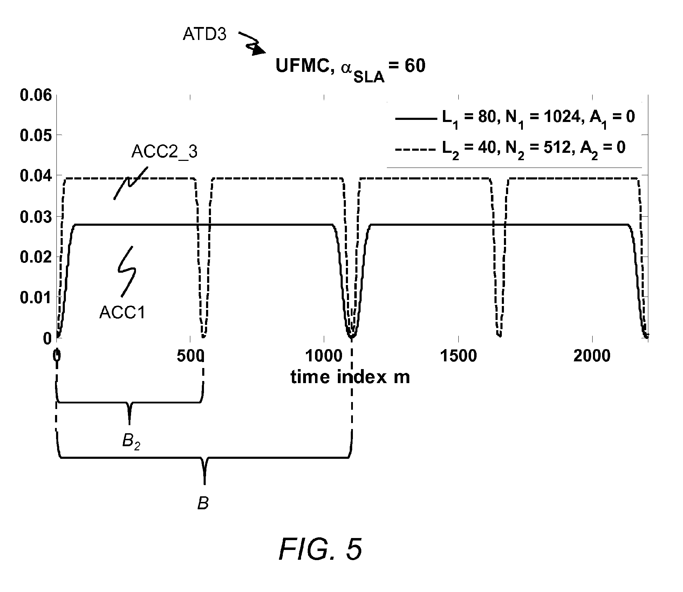

Figure 5 shows amplitude values in arbitrary units of multi-carrier symbols of the universal filtered multicarrier signal as a function of time in arbitrary units for the first time signal and for an even further second time signal which carries second data according to a fourth parameter setting for controlling transmission error sensitivity of the universal filtered multicarrier signal.

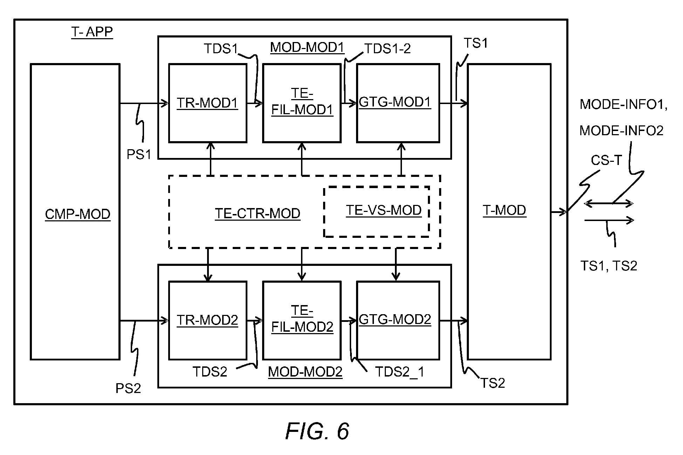

Figure 6 shows schematically a block diagram of a transmitter apparatus operable to control independently transmission error sensitivity of a first time signal and of a second time signal of a universal filtered multicarrier signal according to the embodiments of the invention.

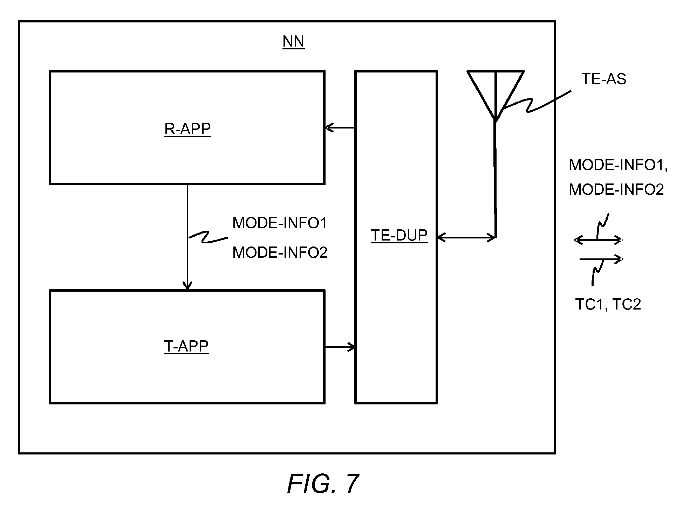

Figure 7 shows schematically a block diagram of a network node which contains a transmitter apparatus which is operable to control independently transmission error sensitivity of a first time signal and of a second time signal of a universal filtered multicarrier signal according to the embodiments of the invention.

DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

In the following some embodiments of apparatuses, methods and computer programs for transmitting and receiving user data and control data will be described. The apparatuses, methods or computer programs in embodiments may be adapted to or configured for a mobile communication system, which may, for example, correspond to one of the 3GPP-standardized mobile communication networks, which may use for example so-called UFMC signals in the future. The term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

For arising 5G communication systems, extensions/modifications of OFDM (OFDM = Orthogonal Frequency Division Multiplexing) using filter banks are discussed, which may lead to increased robustness to delay spreads and Doppler spreads, timing offsets and frequency offsets and spectral efficiency. UFMC signals are described for example in Schaich, F.; Wild, T.; Chen, Y.; "Waveform contenders for 5G - suitability for short packet and low latency transmissions," in proceedings of IEEE Veh. Technol. Conf. Spring (VTC'14 Spring), May 2014 or in Wild, T.; Schaich, F.; Chen, Y.; "5G Air Interface Design based on Universal Filtered (UF-)OFDM," in proceedings of DSP14, Hongkong, August 2014. UFMC uses a block-wise filtering across whole sets of subcarriers, e.g. Physical Resource Blocks (PRBs). This may enable robustness against timing and frequency offsets. Embodiments may adapt a waveform or filter characteristic of a transmit component of the multicarrier signal which carries data to operating conditions in such a way that the transmit component is transmitted more robust in terms of transmission error sensitivity which means that a transmission error probability may be kept below a predefined transmission error probability.

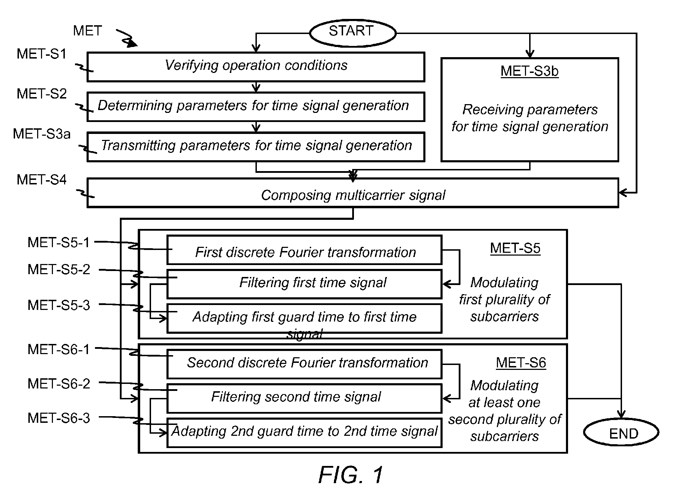

Figure 1 shows schematically a flow diagram MET of a method for generating a multicarrier signal and for controlling transmission error sensitivity of the multicarrier signal. The following detailed description is given for UFMC. A person skilled in the art may easily adapt the procedure for generating the multicarrier signal with respect to specific transmission error requirements to other frequency sub-bandwise modulated multicarriers such as FBMC (FBMC = Filter Bank MultiCarrier).

The flow diagram MET shows three alternatives how the method MET may start. When a transmitter apparatus may be allowed to determine itself parameters for time signal generation to fulfil for example a predefined transmission error requirement for at least one part of the multicarrier signal, the method may start with step MET-S1. When the transmitter apparatus may be not allowed to determine the parameters for the time signal generation and there exists no pre-configuration at the transmitter apparatus, the method may start with step MET-S3b. When the transmitter apparatus is preconfigured with a set of parameters for the time signal generation and for controlling the transmission error sensitivity, the method may start directly with step MET-S4.

By the step MET-S1, operation conditions of the transmitter apparatus may be verified. The operation conditions may be one or several of the following conditions: a synchronization precision of the transmitter apparatus, a transmission performance of a radio link from the transmitter apparatus to a receiver apparatus which is configured to receive the multicarrier signal, an absolute velocity of the transmitter apparatus or a relative velocity between the transmitter apparatus and the receiver apparatus, a proportion between a size of first transmission resources for transmitting the first data and a size of at least second transmission resources for transmitting the at least second data, a time delay spread between a first propagation path of the multicarrier signal from the transmitter apparatus to the receiver apparatus and at least one second propagation path of the multicarrier signal from the transmitter apparatus to the receiver apparatus.

A synchronization precision quality level in time and/or a synchronization precision quality level in frequency of the transmitter apparatus may be known for example from a device class to which the transmitter apparatus is assigned. A velocity of the transmitter apparatus may be measured for example by a sensor of a satellite navigation system such as a GPS sensor (GPS = Global Positioning System) which may be for example part of the transmitter apparatus. When the network node is for example part of a car and may be connected to an internal communication system of the car, an absolute velocity may be measured by the car and a location of a base station which receives the multicarrier signal may be known from a map which is part of the car navigation system or from a transmission of the location from the base station to the car via a broadcast channel. Then, a relative velocity can be determined by conventional calculation methods based on the absolute velocity, a direction in which the car is moving and the location of the base station. The relative velocity between the transmitter apparatus and the receiver apparatus for the multicarrier signal influences frequency offsets of subcarriers of the multicarrier transmit signal due to the well-known Doppler effect. According to a further embodiment by analyzing channel estimation outcomes, the velocity can be estimated, e.g. by observing the autocorrelation and assuming that a fading Doppler spectrum follows the Jakes' assumption, the autocorrelation over a time lag should follow a Bessel function - from this a maximum Doppler shift can be extracted, corresponding to a (radial) velocity vector component.

In a next step MET-S2, parameters for the signal generation may be determined which are used for controlling the transmission error sensitivity of a first time signal and at least one second time signal of the multicarrier signal. This may be done for example by using following mapping table 1 which may be stored at the transmitter apparatus. The parameters for the mapping table 1 may be generated for example by an initial test scenario during fabrication of the transmitter apparatus for finding best suitable parameter sets. Entries of the mapping table 1 may be added during operation of the transmitter apparatus, when for example a base station transmits a parameter set to a mobile station.

Table 1

| Type number of radio transmitter apparatus (or of local oscillator) | (Relative) Velocity or speed of terminal equipment $v$ [km/h] | Proportion between transmission resource size $S_C$ for control data to transmission resource size $S_D$ for user data | Transmission channel properties e.g. Delay spread $DS$ | Parameter set for user data | Parameter set for control data |
|---|---|---|---|---|---|
| | $0 \leq v \leq v_0$ | | $DS < DS_0$ | Set 0 | Set 0 |
| Type 1, Type 2 | $v > v_0$ | $S_C < S_D$ | $DS \geq DS_0$ | Set 0 | Set 3 |
| Type 3, Type 4 | $v > vv_0$ | $S_C < S_D$ | $DS \geq DS_0$ | Set 0 | Set 3a |
| Type 3, Type 4 | $v > v_0$ | $S_C < S_D$ | $DS \geq DS_0$ | Set 0 | Set 3b |
| Type 1, Type 2 | | | | Set 0 | Set 0 |
| Type 3, Type 4 | | $S_C < S_D$ | | Set 0 | Set 1 |
| Type 3, Type 4 | | $S_C < S_D$ | | Set 0 | Set 1a |
| Type 3, Type 4 | | $S_C = S_D$ | | Set 0 | Set 2 |
| Type 3, Type 4 | | $S_C = S_D$ | | Set 0 | Set 2a |

The mapping table 1 contains exemplarily parameter sets for generating a first time signal by modulating a first plurality of subcarriers of the multicarrier signal which carry user data and for generating at least one second time signal by modulating at least one second plurality of subcarriers of the multicarrier signal which carry control data. Alternatively, the control data may be replaced by a second kind of user data, which require a more robust transmission than a first kind of user data. When only a single type of data needs to be submitted than only a single corresponding parameter set may be selected from the mapping table 1 for generating the first time signal and the at least one second time signal.

The mapping table 1 contains exemplarily in a first column type numbers for the transmitter apparatus or for the local oscillator applied within the transmitter apparatus. Type 1 and type 2 transmitter apparatuses may be high precision transmitter apparatus with a high synchronisation precision which are applied for example in base stations (Type 1) and mobile stations (Type 2). Type 3 and type 4 transmitter apparatuses may be low precision transmitter apparatuses with a low synchronisation precision which are applied for example in IoT devices (IoT = Internet of Things).

A second column of the mapping table 1 contains ranges of an absolute velocity of a first network node which contains the transmitter apparatus or preferably of a relative velocity between the first network node and a second network node which contains the receiver apparatus configured to receive the multicarrier signal. A threshold value $v_0$ depends on a subcarrier spacing which is applied for transmission of a group of subcarriers of the multicarrier signal in case of using a parameter set for a transmission which is more robust than a conventional high efficient transmission. For a subcarrier spacing of 15 kHz for conventional transmission and a further subcarrier spacing of 30 kHz for a more robust transmission the threshold value $v_0$ may be for example 150 km/h.

A third column of the mapping table 1 contains a proportion between a transmission resource size $S_C$ for control data and a transmission resource size $S_D$ for user data (see also Figure 2 and corresponding description). The transmission resources may be for example so-called frequency chunks or so-called time frequency chunks.

A fourth column of the mapping table 1 may contain ranges of transmission channel characteristics such as a delay spread, a Doppler shift, an attenuation, an interference or noise condition, a channel quality, a reception power, etc. which may identify which parameter set(s) shall be applied for generating the first time signal and the at least one second time signal.

A fifth column and a sixth column of the mapping table 1 contains names of parameter sets which shall be applied for generating the first time signal and for generating the at least one second time signal. For simplification, only a single parameter set "Set 0" is used for modulating the first time signal with respect to all kind of criteria given in the first to fourth column of the mapping table 1. A skilled person in the art may easily adapt the mapping table 1 in such a way that also different parameter sets may be applied for modulating the first time signal. A skilled person in the art may also easily adapt the mapping table 1 in such a way, that a seventh column or even more columns may be added for further parameter sets to be applied for further plurality of subcarriers of the multicarrier signal for modulating more than two time signals.

When there is an empty table element in a row of the mapping table 1, then this criterion may be not used for determining the parameter sets for modulating the first plurality of subcarriers and the at least one second plurality of subcarriers and for generating the first time signal and the at least one second time signal.

Processing parameters for the various parameter sets may be provided for example by a further mapping table 2 which may be also stored at the transmitter apparatus. An example for such a mapping table is given in the following for the case that a first sub-band carrying the user data contains 12 subcarriers (see Figure 2a) and that a second sub-band carrying the control data contains 4 subcarriers (see Figure 2b):

Table 2

| Name of parameter set | Size of inverse fast Fourier transformation (= number of columns of an inverse Fourier matrix) | Filter length (= number of filter coefficients) | Length of total time guard (= total number of time samples with zero amplitude) | Symbol rate/number of multicarrier symbols per second |
|---|---|---|---|---|
| | $N$ | $L$ | $A$ | |
| Set 0 | 1024 | 80 | 0 | 13925 |
| Set 1 | 850 | 180 | 74 | 13925 |
| Set 1a | 768 | 180 | 156 | 13925 |
| Set 2 | 800 | 64 | 240 | 13925 |
| Set 2a | 768 | 64 | 272 | 13925 |
| Set 3 | 512 | 40 | 0 | 27850 |
| Set 3a | 425 | 90 | 37 | 27850 |
| Set 3b | 400 | 32 | 120 | 27850 |

The mapping table 2 contains exemplarily in a first column the names of the various parameter sets to be applied for generating the first time signal and the at least one second time signal. A second column of the mapping table 2 contains a so-called length $N$ (integer value) of a discrete Fourier transformation as applied in OFDM. The length $N$ of the discrete Fourier transformation may be identical to a number of columns of an inverse Fourier matrix which is applied for transforming either the first plurality of subcarriers carrying the user data into the first time signal or for transforming the at least second plurality of subcarriers carrying the control data into the at least one second time signal. A third column of the mapping table 2 contains a so-called filter length $L$ (integer value) of a filter module for filtering either the first time signal or the at least one second time signal. The filter length $L$ may be identical to a number of filter coefficients which are applied for filtering the first time signal or the at least one second time signal. The values $N$ and $L$ are selected with respect to a total number of samples of the UFMC signal (see fifth column of mapping table 2) in such a way that the total number of samples consists of $N$ time samples for a main part of the UFMC signal (see also Figure 2) and of $L - 1$ samples due to filtering.

A fourth column of the mapping table 2 contains a length $A$ of a so-called total time guard which is applied at a beginning of the first time signal and an end of the first time signal and/or is applied at a beginning of the at least second time signal and an end of the at least second time signal. The length $A$ may be identical to a number of time samples with zero amplitude values at the beginning of the first time signal and at the end of the first time signal or to a number of time samples with zero amplitude values at the beginning of the at least one second time signal and at the end of the at least one second time signal.

A fifth column of the mapping table 2 contains a symbol rate (equal to a number of multicarrier symbols per second) to be applied for the first time signal and/or the at least one second time signal. For predefining the values of the parameter sets which are shown in the mapping table 2 a sample rate of 10 MHz such as applied in LTE was assumed which is identical to 15,36 Mega samples per second. The values given in mapping table 2 are only example values. The values for the parameter set "Set 1" may be selected for example in such a way, that a summand of $N$, $L$, and $A$ for the parameter set "Set 1" is the same as a summand of *N, L,* and *A* for the parameter set "Set 0".

By a further step MET- S3a, information of the parameter set for generating at least one of the first time signal and the at least one second time signal may be transmitted from the transmitter apparatus to the receiver apparatus which is configured to receive the multicarrier signal. Preferably, only an index for a parameter set or at least two indexes for at least two parameter sets may be transmitted from the transmitter apparatus to the receiver apparatus, when the receiver apparatus also applies a similar mapping table as the mapping table 2. Alternatively, the values of one or more parameter sets may be transmitted from the transmitter apparatus to the receiver apparatus.

In the alternative step MET- S3b, the transmitter apparatus which may be part of a first network node may receive the information of at least one parameter set from a second network node which may contain for example the receiver apparatus. Also in this case, either at least one index for at least one parameter set is received from the second network node or the values of at least one parameter set are received from the second network node.

When the method MET directly starts with the step MET-S4, the parameters for at least one parameter set either have to be preconfigured at the transmitter apparatus and at the receiver apparatus which is configured to receive the multicarrier signal or have to be exchanged between the transmitter apparatus and the receiver apparatus before a communication or may be available from a previous communication. According to a further embodiment, when a total number of parameter sets as listed in the mapping table 2 is not too large, the receiver apparatus may be configured to estimate a parameter set used for the multicarrier signal based on pilot symbols which are transmitted as part of the multicarrier signal.

In the next step MET-S4, the multicarrier signal is composed in such a way, that the multicarrier signal contains a first plurality of subcarriers which carries for example the user data and a second plurality of subcarriers which carries for example the control data. The first plurality of subcarriers may be represented for example by a vector $s_1$ having a dimension of $[n_1 \times 1]$ with $n_1$ being a number of subcarriers carrying the user data and to be filtered by one of the filters used for UFMC. The second plurality of subcarriers may be represented for example by a further vector $s_2$ having a dimension of $[n_2 \times 1]$ with $n_2$ being a number of subcarriers carrying the control data and to be filtered by a further one of the filters used for UFMC.

By further steps MET-S5 and MET-S6, the first plurality of subcarriers and the at least one second plurality of subcarriers are modulated separately by same or different parameter sets.

The step MET-S5 may use a parameter set $L_1$, $N_1$, $A_1$ and may contain sub-steps MET-S5-1, MET-S5-2 and MET-S5-3 for modulating the first plurality of subcarriers. By the sub-step MET-S5-1 the first plurality of subcarriers is converted into a first time domain signal by applying a first discrete Fourier transformation. The first discrete Fourier transformation may be represented for example by following equation:

$$y_1 = V_1 \cdot s_1 \qquad (1)$$

with

$y_1$: output vector of the first discrete Fourier transformation with dimension $[N_1 \times 1]$,
$V_1$: inverse Fourier matrix of the first discrete Fourier transformation with dimension $[N_1 \times n_1]$ and with $N_1$ representing the size of the first discrete Fourier transformation,
$N_1$: so-called first baseline discrete Fourier transformation length used for user data.

The size $N_1$ of the first discrete Fourier transformation is adapted to a first transmission error requirement which a first time domain signal should be fulfill when received at the receiver apparatus. The first transmission error requirement may be for example a first predefined number of transmission errors per time unit which should be not exceeded. Alternatively the size $N_1$ of the first discrete Fourier transformation may be adapted to an overall transmission error requirement of the first time domain signal and of a second time domain signal.

Using the further sub-step MET-S5-2, the first time domain signal is filtered by applying a first filter module. The first filter module may be for example a first band pass filter with a first filter length $L_1$. This first filtering of the first time domain signal may be represented by following equation:

$$x_1 = F_1 \cdot y_1 = F_1 \cdot V_1 \cdot s_1 \qquad (2)$$

with

$x_1$: output vector of the first filtering with dimension $[(N_1 + L_1 - 1) \times 1]$,
$F_1$: so-called Toeplitz matrix with dimension $[(N_1 + L_1 - 1) \times N_1]$ and which is composed of the filter impulse response of the first band pass filter and which performs a first linear convolution.

The first filter length $L_1$ is also adapted to the first transmission error requirement or to the overall transmission error requirement.

By the sub-step MET-S5-3 also guard times at a beginning and at an end of the first time domain signal may be adapted to the first transmission error requirement or to the overall transmission error requirement. The guard times at the beginning and at the end of the first time domain signal preferably have a same time length and may be generated for example by inserting half of the number $A_1$ of time samples with zero amplitude values at the beginning of the first time domain signal and by inserting a further half of the number $A_1$ of time samples with zero amplitude values also at an end of the first time domain signal.

The step MET-S6 may use a parameter set $L_2$, $N_2$, $A_2$ and may contain sub-steps MET-S6-1, MET-S6-2 and MET-S6-3 for modulating the at least one second plurality of subcarriers. By the sub-step MET-S6-1 the second plurality of subcarriers is converted into the second time domain signal by applying a second discrete Fourier transformation. The second discrete Fourier transformation may be represented for example by following equation:

$$y_2 = V_2 \cdot s_2 \qquad (3)$$

with

$y_2$: output vector of the second discrete Fourier transformation with dimension [$N_2 \times 1$],
$V_2$: inverse Fourier matrix of the second discrete Fourier transformation with dimension [$N_2 \times n_2$] and with $N_2$ representing the size of the second discrete Fourier transformation with $N_2 < N_1$.

The size $N_2$ of the second discrete Fourier transformation is adapted to a second transmission error requirement which the second time domain signal should be fulfill when received at the receiver apparatus. The second transmission error requirement may be for example a second predefined number of transmission errors per time unit which should be not exceeded. Alternatively the size $N_2$ of the second discrete Fourier transformation may be adapted to the overall transmission error requirement of the first time domain signal and of the at least one second time domain signal.

Using the further sub-step MET-S6-2, the second time domain signal is filtered by applying a second filter module. The second filter module may be for example a second band pass filter with a second filter length $L_2$. This second filtering of the second time domain signal may be represented by following equation:

$$x_2 = F_2 \cdot y_2 = F_2 \cdot V_2 \cdot s_2 \qquad (4)$$

with

$x_2$: output vector of the second filtering with dimension [$(N_2 + L_2 - 1) \times 1$],
$F_2$: so-called Toeplitz matrix with dimension [$(N_2 + L_2 - 1) \times N_2$] and which is composed of the filter impulse response of the second band pass filter and which performs a second linear convolution.

The second filter length $L_2$ is also adapted to the second transmission error requirement or to the overall transmission error requirement.

By the sub-step MET-S6-3 also guard times at a beginning and at an end of the second time domain signal may be adapted to the second transmission error requirement or to the overall transmission error requirement. The guard times at the beginning and at the end of the second time domain signal preferably have a same time length and may be generated for example by inserting half of the number $A_2$ of time samples with zero amplitude values at the beginning of the second time domain signal of the control data radio resource elements and by inserting a further half of the number $A_2$ of time samples with zero amplitude values also at an end of the second time domain signal of the control data radio resource elements.

According to further embodiments which are not shown in Figure 1 for simplification, further steps similar to the steps MET-S5, MET-S6 and further sub-steps similar to the sub-steps MET-S5-1, MET-S5-2, MET-S5-3, MET-S6-1, MET-S6-2, MET-S6-3 may be part of the method MET for further pluralities of subcarriers carrying further data and for generating further transmit signals by modulating the further pluralities of subcarriers.

According a further embodiment which is not shown in the Figures for simplification, a sequence of the sub-steps MET-S5-1, MET-S5-2 may be reversed and a sequence of the sub-steps MET-S6-1, MET-S6-2 may be reversed. This means that a filtering of the first plurality of subcarriers may be done in the frequency domain with the first filter length before the first discrete Fourier transformation is executed and a filtering of the at least one second plurality of subcarriers may be done also in the frequency domain with the at least one second filter length before the at least one second discrete Fourier transformation is executed. A skilled person in the art may easily adapt the method MET as shown in Figure 1 and the transmitter apparatus as shown in Figure 6 for realizing the further embodiment.

In various embodiments, the first parameter set may be represented by $L_1$, $N_1$, $A_1$ with $N_1 \neq 0$, $L_1 \neq 0$, $A_1 = 0$ and the second parameter set may be represented by $L_2$, $N_2$, $A_2$ with $N_2 \neq 0$, $L_2 \neq 0$, $A_2 \neq 0$. (see second mapping table)

In a further step MET-TE-S9 the multicarrier signal which contains the first time signal and the second time signal is transmitted from the transmitter apparatus to the receiver apparatus. Therefore, the multicarrier signal may be for example up-converted from an intermediate frequency range to a radio frequency range, may be amplified and may be provided to an antenna system which is connected to the transmitter apparatus.

Figure 2 shows a visualization of a first symbol of the first time signal and of a second symbol of the second time signal. The first symbol is exemplarily shown in a first frequency time diagram FTD1 by a first time frequency chunk TFC1 which exemplarily may consist of two LTE PRBs (see Figure 2a). The first time frequency chunk TFC1 contains $n_1 = 12$ frequency subcarriers SC1-1, SC2-1, ..., SC12-1 which are located in a first frequency range $[f_1, f_2]$ with a first bandwidth of $\Delta F_1 = n_1 \cdot \Delta f_1 = 12 \cdot \Delta f_1$ and with a first subcarrier spacing $\Delta f_1$. In time direction, the first time frequency chunk TFC1 has a first time duration $[t_{1\_1}, t_{2\_1}]$ which corresponds for example to a time length of a a single LTE symbol. The first frequency range $[f_1, f_2]$ and the first time duration $[t_{1\_1}, t_{2\_1}]$ defined a size of the first time frequency chunk TFC1. The first time duration $[t_{1\_1}, t_{2\_1}]$ is split in a first central main part with a number of $N_1$ time samples, in a first ramping up part with a number of $ceil\left(\frac{L_1}{2}\right)$ time samples and in a first ramping down part with a number of $floor\left(\frac{L_1}{2}\right)$ time samples (ceil(...) is the so-called ceiling function and *floor()* is the so-called floor function).

The second symbol is exemplarily shown in a second frequency time diagram FTD2 by a second time frequency chunk TFC2 which has a much smaller size than the first time frequency chunk TFC1 (see Figure 2b). The second time frequency chunk TFC2 may only contain $n_2 = 4$ frequency subcarriers SC1-2, SC2-2, SC3-2, SC4-2 which are located in a second frequency range $[f_3, f_4]$ with a second bandwidth of $\Delta F_2 = n_2 \cdot \Delta f_2 = 4 \cdot \Delta f_2$, with a second subcarrier spacing $\Delta f_2$ and with $[f_1, f_2] > [f_3, f_4]$. In time direction, the second time frequency chunk TFC2 may have a second time duration $[t_{1\_2}, t_{2\_2}]$ being shorter than the first time duration $[t_{1\_1}, t_{2\_1}]$ with $[t_{1\_2}, t_{2\_2}] \in [t_{1\_1}, t_{2\_1}]$. The second frequency range $[f_3, f_4]$ and the second time duration $[t_{1\_2}, t_{2\_2}]$ define a size of the second time frequency chunk TFC2. The time duration $[t_{1\_2}, t_{2\_2}]$ is split in a second central main part with a number of $N_2$ time samples, in a beginning blanked part with a number of $A_2$ time samples which are blanked with zero amplitude values, in a second ramping up part with a number of $ceil\left(\frac{L_2}{2}\right)$ time samples, in a second ramping down part with a number of $floor\left(\frac{L_2}{2}\right)$ time samples and in an ending blanked part with a number of $A_2$ time samples which are also blanked with zero amplitude values.

With $L_2 + A_2 > L_1 + A_1$ with $A_1 = 0$ which results in $N_2 < N_1$, a robustness of the transmission of the control data against delay spread and timing offsets can be increased (see parameter setsparameter sets "Set 1", "Set 1a", "Set 2" and "Set 2a" in mapping table 2).

By setting $N_2 < N_1$ (which means decreasing $N_2$ in comparison to $N_1$), while keeping sampling rate identical for user data and control data and by applying a smaller symbol rate for the control data than for the user data, the second subcarrier spacing $\Delta f_2$ grows proportional to $\frac{N_1}{N_2}$. Thereby, the robustness of the control data against Doppler spread and carrier frequency offsets can be increased (see parameter sets "Set 3", "Set 3a", and "Set 3b" in mapping table 2).

In the following the parameter sets giving in mapping table 1 and mapping table 2 are described in more detail:

Parameter set "Set 0":
The parameter set "Set 0" may be a baseline parameter set which is applied for the user data, when transmission efficiency is more important than robustness of the transmission with respect to transmission errors.

Parameter set "Set 1":
With respect to modulating the first time signal, the first size of the first discrete Fourier transformation may be set to a first Fourier transformation value $N_1$, the first filter length may be set to a first filter length value $L_1$, and the first guard time may be equal to half of a first guard time value $A_1$.

With respect to modulating the second time signal, the at least one second size of the at least one second discrete Fourier transformation may be set to a second Fourier transformation value $N_2$ smaller than the first Fourier transformation value $N_1$, the at least one second filter length may be set to a second filter length value $L_2$ larger than the first filter length value $L_1$, and the at least one second guard time may be equal to half of at least one second guard time value $A_2$ larger than the first guard time value $A_1$, when a size of the first transmission resources for transmitting the first data is a predefined amount larger than a size of second transmission resources for transmitting the at least second data.

Thereby, the first Fourier transformation value $N_1$, the first filter length value $L_1$, the first guard time value $A_1$, the at least one second Fourier transformation value $N_2$, the at least one second filter length value $L_2$, and the at least one second guard time value $A_2$ may fulfill equation $N_1 + L_1 + A_1 = N_2 + L_2 + A_2$. In one preferred embodiment, the first guard time value $A_1$ may be set to zero (see mapping table 2).

This means, the parameter set "Set 1" may be preferably applied for modulating the second time signal, when the second time frequency chunk size $S_C$ for the control data is smaller than the time frequency chunk size $S_D$ for the user data such as shown in Figure 2 and when the control data shall be transmitted more robust with respect to transmission errors than the first time signal which may be modulated by the parameter set "Set 0".

Parameter set "Set 1a":

Figure 3 shows a first amplitude time diagram ATD1 in arbitrary units with a first amplitude characteristic curve ACC1 of the first time signal which is generated by the parameter set "Set 0" and with a second amplitude characteristic curve ACC2_1 of the second time signal which is generated by the parameter set "Set 1a". The parameter $\alpha_{SLA}$ = **60** is a side-low attenuation value of a Dolph-Chebychev filter which is known to skilled persons in the art and is therefore not described in more detail.

Figure 3 only shows absolute values of complex sinusoids of the first time signal and the second time signal for the case when only a single subcarrier of the first plurality of subcarriers and of the second plurality of subcarriers carries data and when further subcarriers of the first plurality of subcarriers and of the second plurality of subcarriers carry zero values. When the user data and the control data are typically allocated to different frequency sub-bands (see Figure 2) frequencies of the complex sinusoids of the first transmit component and the second transmit component are different. By modulating the first time signal with the parameter set "Set 0" and the second time signal with the parameter set "Set 1a", symbols of the first time signal and of the second time signal have a same total symbol duration $B$.

The modulation mode "Mode 1a" may be also preferably applied for the control data, when the second time frequency chunk size $S_C$ for the control data is smaller than the time frequency chunk size $S_D$ for the user data such as shown in Figure 2.

Preferably, the Fourier transformation values $N_1$ and $N_2$ are numerical chosen for the parameter set "Set 1a" in such a way, that the Fourier transformation values $N_1$ and $N_2$ fulfill for example following equation:

$$w \cdot N_1 = x \cdot N_2 = y \cdot 2^z \qquad (5)$$

with $w$, $x$, $y$, $Z$ being integer values. Thereby, it can be achieved, that the base station apparatus is able to demodulate the multicarrier signal by a single FFT for a joint detection and demodulation of the first plurality of subcarriers carrying the user data and the second plurality of subcarriers carrying the control data.

One possible solution for the equation (5) is for example shown in following table:

Table 3

| $w$ | $N_1$ | x | $N_2$ | y | z |
|---|---|---|---|---|---|
| 3 | 1024 | 4 | 768 | 3 | 10 |

This selection of the Fourier transformation values $N_1$ and $N_2$ provides for a high transmission efficiency for the first time signal carrying for example the user data and for a high robustness against transmission errors for the second time signal carrying for example the control data and allows applying a single FFT for the demodulation and joint detection at the receiver apparatus as mentioned above. Parameter set "Set 2":

Figure 4 shows similar to Figure 3 a second amplitude time diagram ATD2 in arbitrary units with the first amplitude characteristic curve ACC1 of the first time signal which is generated by the parameter set "Set 0" and with a further second amplitude characteristic curve ACC2_2 of the second time signal which is generated according to the parameter set "Set 2". By generating the first time signal with the parameter set "Set 0" and the second time signal with the parameter set "Set 2", symbols of the first time signal and of the second time signal have the same total symbol duration $B$. With respect to generating the first time signal, the size of the first discrete Fourier transformation may be set to a first Fourier transformation value $N_1$, the first filter length may be set to a first filter length value $L_1$ and the first guard time may be equal to half of a first guard time value $A_1$.

With respect to generating the second time signal, the at least one second size of the at least one second discrete Fourier transformation may be set to at least one second Fourier transformation value $N_2$ smaller than the first Fourier transformation value $N_1$, the at least one second filter length may be set to at least one second filter length value $L_2$ larger than the first filter length value $L_1$ and the second guard time may be equal to half of at least one second guard time value $A_2$ larger than the first guard time value $A_1$, when the size of the first transmission resources for transmitting the first data does not exceed by a predefined amount a size of second transmission resources for transmitting the at least second data.

Thereby, the first Fourier transformation value $N_1$, the first filter length value $L_1$, the first guard time value $A_1$, the at least one second Fourier transformation value $N_2$, the at least one second filter length value $L_2$, and the at least one second guard time value $A_2$ may fulfill equation $N_1 + L_1 + A_1 = N_2 + L_2 + A_2$. In one preferred embodiment, the first guard time value $A_1$ may be set to zero (see mapping table 2).This means, the parameter set "Set 2" may be preferably applied for generating the second time signal, when the second time frequency chunk size $S_C$ for the control data is equal to the first time frequency chunk size $S_D$ for the user data or when a difference between the first time frequency chunk size $S_D$ and the second time frequency chunk size $S_C$ is below a predefined value.

Parameter set "Set 2a":

The parameter set "Set 2a" may be preferably selected and applied for the control data, when the second time frequency chunk size $S_C$ for the control data is equal to the first time frequency chunk size $S_D$ for the user data. Similar to the parameter set "Set 1a", the Fourier transformation values $N_1$ and $N_2$ are numerical chosen in such a way, that the Fourier transformation values $N_1$ and $N_2$ fulfill the equation (5) which is given above. Example values for the Fourier transformation values $N_1$ and $N_2$ are given above in table 3. Using the parameter set "Set 2a" for the second transmit signal carrying the control data and the parameter set "Set 0" for the first time signal carrying the user data, it can be also achieved, that the receiver apparatus which is configured to receive the multicarrier signal is able to demodulate the multicarrier signal by a single FFT for a joint detection and demodulation of the first plurality of subcarriers carrying the user data and the second plurality of subcarriers carrying the control data. In addition, such a selection of the Fourier transformation values $N_1$ and $N_2$ provides high transmission efficiency for the first time signal carrying the user data and a high robustness against transmission errors for the second time signal carrying the control data.

Parameter set "Set 3":

Figure 5 shows similar to Figure 3 and Figure 4 a third amplitude time diagram ATD3 in arbitrary units with the first amplitude characteristic curve ACC1 of the first time signal which is generated by the parameter set "Set 0" and with an even further second amplitude characteristic curve ACC2_3 of the second time signal which carries control data and which is generated by the parameter set "Set 3".

A total symbol duration $B_1$ of a symbol of the second time signal being generated based on the parameter set "Set 3" is half size of the total symbol duration $B$ for the symbol of the first time signal being generated based on the parameter set "Set 0". This means, that the second symbol rate for the second time signal is twice as large as the first symbol rate for the first time signal. This means also, that the second subcarrier spacing $\Delta f_2$ is twice as large as the first subcarrier spacing $\Delta f_1$.

The parameter set "Set 3" may be for example selected for user data and control data of having equal time frequency chunk sizes or having a difference between the time frequency chunk sizes below a predefined value and for a transmitter apparatus which moves with a velocity above the threshold value $v_0$ (see mapping table 1). Applying the parameter set "Set 3" increases the robustness with respect to carrier frequency offsets for data which are transmitted from a transmitter apparatus which moves with a high velocity but does not increase the robustness against delay spread and resulting timing offsets.

Parameter set "Set 3a":

The modulation mode "Mode 3a" also has an increased robustness for the control data for protection against high velocities of the transmitter apparatus and resulting large carrier frequency offsets by reducing the total symbol duration $B_1$ for a symbol of the second time signal to half size of the total symbol duration $B$ for a symbol of the first time signal. In comparison to the parameter set "Set 3", the second Fourier transformation value may be further $N_2$ decreased and one or both of the parameters $L_2$, $A_2$ is/are increased (see mapping table 2) for having also protection and robustness against delay spread and resulting timing offsets.

Parameter set "Set 3b":

The parameter set "Set 3b" also has an increased robustness for the control data for protection against high velocities of the transmitter apparatus and resulting large carrier frequency offsets by reducing the total symbol duration $B_1$ for a symbol of the second time signal to half size of the total symbol duration B for a symbol of the first time signal. In comparison to the parameter sets "Set 3" and "Set 3a", the filter length value $L_2$ may be adapted to the time frequency chunk size of the second time signal. In such a case, the filter length value $L_2$ may be set to a decreased value when an increased time frequency chunk size of the second time signal is applied and the second Fourier transformation value $N_2$ and the second guard time value $A_2$ are adapted accordingly.

With respect to a further preferred embodiment which may be combined with all described parameter sets, the composing of the multicarrier signal composes the second plurality of subcarriers by blanking a first number of the second plurality of subcarriers having a smallest subcarrier index and by blanking a second number of the second plurality of subcarriers having a largest subcarrier index.

Figure 6 illustrates an embodiment of a transmitter apparatus T-APP for generating the multicarrier signal. The transmitter apparatus T-APP may be for example a radio transmitter apparatus which is configured to operate in one of the mobile radio communication systems as mentioned above. Alternatively, the transmitter apparatus may be configured to transmit the multicarrier signal via a coaxial cable to the receiver apparatus or via an optical fiber to the receiver apparatus. DSL (DSL = Digital Subscriber Line) for example applies a variant of OFDM.

The transmitter apparatus T-APP contains a composer module CMP-MOD, which is operable to compose a multicarrier signal which contains a first plurality of subcarriers PS1 carrying for example the user data and of a second plurality of subcarriers PS2 carrying for example the control data. That is to say that the multicarrier signal contains orthogonal or non-orthogonal subcarriers, each having a certain sub-bandwidth. The composer module CMP-MOD may correspond to one or more composer units, one or more composer devices, or any means for composing. In some embodiments the composer module CMP-MOD may be implemented in software, which is executable on accordingly adapted hardware, such as a processor, a DSP (DSP = Digital Signal Processor), an ASIC (ASIC = Application-Specific Integrated Circuit), an FPGA (FPGA = Field-Programmable Gate Array), a multi-purpose processor, or the like. The composer module CMP-MOD may determine or receive user data and control data and then composes a multicarrier transmit signal for subsequent filtering and transmission.

According to further alternatives, the composer module CMP-MOD may be operable to compose a multicarrier signal which contains three or more than three plurality of subcarriers. These further alternatives are not shown in Figure 6 for simplification.

The transmitter apparatus T-APP further contains a first modulator module MOD-MOD1, which is operable to modulate the first plurality of subcarriers PS1 using a first parameter set. In some embodiments the first modulator module MOD-MOD1 may be implemented in software, which is executable on accordingly adapted hardware, such as a processor, a DSP, an ASIC, an FPGA, a multi-purpose processor, or the like.

The first modulator module MOD-MOD1 contains a first transformation module TR-MOD1, a first filter module TE-FIL-MOD1 and a first guard time generation module GTG-MOD1. The first transformation module TR-MOD1 is configured to apply a first discrete Fourier transformation and is operable to transform the first plurality of subcarriers PS1 into the first time domain signal TDS1 by using the first discrete Fourier transformation with the first Fourier transformation value $N_1$. The first filter module TE-FIL-MOD1 is configured to apply a first filter characteristic and may be for example a first band pass filter with the first filter length $L_1$ and is operable to filter the first time domain signal TDS1 for obtaining a further first time domain signal TDS1-2. The first filter module TE-FIL-MOD1 may correspond to one or more filter devices, one or more filter units, or any means for filtering. For example, the first filter module TE-FIL-MOD1 may correspond to at least one Finite Impulse Response (FIR) filter and may be implemented digitally, e.g. by means of software being executed on accordingly adapted hardware, such as a DSP.

The first guard time generation module GTG-MOD1 is configured to apply a first guard time characteristic and is operable to generate the first guard time at the beginning of the further first time domain signal TDS1-2 and at the end of the further first time domain signal TDS1-2 for obtaining the first time signal TS1 by inserting $A_1/2$ zero-amplitude samples at the beginning of the further first time domain signal TDS1-2 and by inserting further $A_1/2$ zero-amplitude samples at the end of the further first time domain signal TDS1-2.

The transmitter apparatus T-APP further contains a second modulator module MOD-MOD2, which is operable to modulate the second plurality of subcarriers PS2 using a second parameter set. In some embodiments the second modulator module MOD-MOD2 may be implemented in software, which is executable on accordingly adapted hardware, such as a processor, a DSP, an ASIC, an FPGA, a multi-purpose processor, or the like.

The second modulator module MOD-MOD2 contains a second transformation module TR-MOD2, a second filter module TE-FIL-MOD2 and a guard time generation module GTG-MOD. The second transformation module TR-MOD2 is configured to apply a second discrete Fourier transformation and is operable to transform the second plurality of subcarriers PS2 into the second time domain signal TDS2 by using the second discrete Fourier transformation with the second Fourier transformation value $N_2$. The second filter module TE-FIL-MOD2 is configured to apply a second filter characteristic and may be for example a second band pass filter with the second filter length $L_2$ and is operable to filter the second time domain signal TDS2 for obtaining a further second time domain signal TDS2-1. The second filter module TE-FIL-MOD2 may correspond to one or more filter devices, one or more filter units, or any means for filtering. For example, the second filter module TE-FIL-MOD2 may correspond to at least one FIR filter and may be implemented digitally, e.g. by means of software being executed on accordingly adapted hardware, such as a DSP.

The second guard time generation module GTG-MOD2 is configured to apply a second guard time characteristic and is operable to generate the second guard time at the beginning of the further second time domain signal TDS2-1 and at the end of the further second time domain signal TDS2-1 for obtaining the second time signal TS2 by inserting $A_2/2$ of zero-amplitude samples at the beginning of the further second time domain signal TDS2-1 and by inserting $A_2/2$ of zero-amplitude samples at the end of the further second time domain signal TDS2-1.

The transmitter apparatus T-APP further contains a transmitter module T-MOD, which is operable to transmit the multicarrier signal which contains the first time signal and the second time signal. The transmitter module T-MOD may correspond to one or more transmitter devices, one or more transmitter units, or any means for transmitting. The transmitter module T-MOD may therefore contain typical transmitter components, such as filter or filter circuitry, an amplifier such as a Power Amplifier (PA), conversion circuitry for converting a base band signal to a Radio Frequency (RF) signal, a digital/analogue converter, or signal processing capability such as DSP.

The transmitter apparatus TE-T-APP further contains a connection socket CS-T, which is connected to an output of the transmitter module T-MOD. The connection socket CS-T is operable to output for example the multicarrier signal as an RF signal. The transmitter apparatus T-APP may be further operable to transmit or receive information MODE-INFO1 about the first parameter set and further information MODE-INFO2 about the second parameter set. The information MODE-INFO1 and the information MODE-INFO2 may contain for example indexes for the first parameter set and the second parameter set as listed in table 2.

In some embodiments the transmitter apparatus T-APP may further contain a control module TE-CTR-MOD, which is operable to control the first discrete Fourier transformation of the first transformation module TR-MOD1, the second discrete Fourier transformation of the second transformation module TR-MOD2, the first filter characteristic of the first filter module TE-FIL-MOD1, the second filter characteristic of the second filter module TE-FIL-MOD2, the first guard time characteristic of the first guard time generation module GTG-MOD1 and the second guard time characteristic of the second guard time generation module GTG-MOD2. The control module TE-CTR-MOD may correspond to one or more control units, one or more control devices, or any means for controlling. In some embodiments the control module TE-CTR-MOD may be implemented in software, which is executable on accordingly adapted hardware, such as a processor, a DSP, an ASIC, an FPGA, a multi-purpose processor, or the like.

The control module TE-CTR-MOD may be coupled to the first transformation module TR-MOD1, the second transformation module TR-MOD2, the first filter module TE-FIL-MOD1, the second filter module TE-FIL-MOD2, the first guard time generation module GTG-MOD1 and the second guard time generation module GTG-MOD2 and is illustrated in Figure 6 as an optional component (dashed lines) of the transmitter apparatus T-APP. The control module TE-CTR-MOD may be for example not required, when the first parameter set is preconfigured at the first modulator module MOD-MOD1 and the second parameter set is preconfigured at the second modulator module MOD-MOD2.

The control module TE-CTR-MOD may contain for example a velocity sensor module TE-VS-MOD which is operable to determine the current velocity/speed of the transmitter apparatus T-APP. The velocity sensor module TE-VS-MOD may have for example a receiver for RF signals which are transmitted from satellites of a satellite navigation system, and a calculation unit which determines the current velocity/speed of the transmitter apparatus T-APP based on the received RF signals from the satellites and an output for the current velocity/speed of the transmitter apparatus T-APP.

In some embodiments, the control module TE-CTR-MOD may be operable to obtain information related to transmission channel properties of a transmission channel between the transmitter apparatus T-APP and the receiver apparatus which is configured to receive the multicarrier signal. Such information may correspond to any information on, for example, a delay spread, a Doppler shift, an attenuation, an interference or noise condition, a channel quality, a reception power, etc and may be used for controlling the sub-modules TR-MOD1, TE-FIL-MOD1, and GTG-MOD1 of the first modulator module MOD-MOD1 and for controlling the sub-modules TR-MOD2, TE-FIL-MOD2, and GTG-MOD2 of the second modulator module MOD-MOD2. In further embodiments the control module TE-CTR-MOD may be operable to select the first discrete Fourier transformation for the first transformation module TR-MOD1, the second discrete Fourier transformation for the second transformation module TR-MOD2, the first filter characteristic for the first filter module TE-FIL-MOD1, the second filter characteristic for the second filter module TE-FIL-MOD2, the first guard time characteristic for the first guard time generation module GTG-MOD1 and the second guard time characteristic for the second guard time generation module GTG-MOD2 from a first parameter set and from a second parameter set which may be stored as the mapping table 1 and the mapping table 2 at the control module TE-CTR-MOD.

Figure 7 illustrates an exemplarily embodiment of a network node NN which contains the transmitter apparatus T-APP as illustrated in Figure 6. The network node NN may be for example a base station apparatus or terminal equipment.

The term "base station apparatus" may be considered synonymous to and/or referred to as a base station transceiver, a CSG base station transceiver (CSG = closed subscriber group), access point base station, access point, macro base station or macro radio cell, femto base station or femto radio cell, pico base station or pico radio cell etc. and may describe equipment that provides wireless connectivity via one or more radio links to one or more mobile stations.

The term "macro base station" may be considered synonymous to and/or referred to a base station, which provides a radio cell having a size in a range of several hundred meters up to several kilometres. A macro base station usually has a maximum output power of typically tens of watts. The term "macro radio cell" may be considered synonymous to and/or referred to a radio cell, which provides the widest range of all radio cell sizes. Macro cells are usually found in rural areas or along highways.

The term "pico base station" may be considered synonymous to and/or referred to a pico radio cell typically covering a small area, such as in-building (offices, shopping malls, train stations, stock exchanges, etc.), or more recently in-aircraft. In cellular networks, pico radio cells are typically used to extend coverage to indoor areas where outdoor signals do not reach well, or to add network capacity in areas with very dense phone usage, such as train stations.

The term "femto radio cell" may be considered synonymous to and/or referred to a small, low-power cellular base station, typically designed for use in a home or a small business. A broader term which is more widespread in the industry is small cell, with femto cell as a subset.

The term "terminal equipment" may be considered synonymous to, and may hereafter be occasionally referred to, as a mobile unit, a mobile user, an access terminal, a UE (UE = user equipment), a subscriber, a user, a cellular telephone, a smart phone, a portable computer, a pocket computer, a hand-held computer, a PDA (PDA = Personal Digital Assistant), a USB stick (USB = Universal Serial Bus), a smart watch, a sensor such as a sensor for meteorological data, an RFID tag, a head mounted display such as a Google glass or a car-mounted mobile device such as a repeater or relay.

The network node NN further contains a receiver apparatus R-APP, which is operable to receive from a further network node the information MODE-INFO1, MODE-INFO2 about the parameter sets to be applied by the network node NN and which is further operable to provide the information MODE-INFO1, MODE-INFO2 about the parameter sets to the control module TE-CTR-MOD of the transmitter apparatus T-APP. The receiver apparatus R-APP may correspond to one or more receiver devices, one or more receiver units, or any means for receiving. The receiver apparatus R-APP may therefore comprise typical receiver components, such as filter or filter circuitry, an amplifier such as an LNA, conversion circuitry for converting for example a received RF signal to a base band signal, an analog/digital converter, or signal processing capability such as a DSP.

The network node NN may further contains a duplexer TE-DUP and an antenna system TE-AS, when the multicarrier signal is transmitted as a radio signal. The duplexer TE-DUP may be operable to provide RF signals which contain the multicarrier signal with the first time signal TS1 and the second time signal TS2 from the transmitter apparatus T-APP to the antenna system TE-AS and may be further operable to provide received RF signals which contain the information MODE-INFO1, MODE-INFO2 about the parameter sets from the antenna system TE-AS to the receiver apparatus R-APP.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the method MET disclosed in the specification or in the claims may be implemented by a device having means for performing each of the respective steps of these methods. Preferably, a computer program product may contain computer-executable instructions for performing the method MET, when the computer program product is executed on a programmable hardware device such as a DSP, an ASIC or an FPGA. Preferably, a digital data storage device may encode a machine-executable program of instructions to perform the method MET.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (MET) for generating a multicarrier signal by a transmitter apparatus (T-APP) comprising:

   - composing (MET-S4) said multicarrier signal comprising a first plurality of subcarriers (PS1) carrying first data and at least one second plurality of subcarriers (PS2) carrying at least second data,
   - modulating (MET-S5) said first plurality of subcarriers (PS1) according to a first parameter set for obtaining a first time signal (TS1) by applying (MET-S5-1) a first discrete Fourier transformation having a first size, by filtering (MET-S5-2) using a first filter module (TE-FIL-MOD1) having a first filter length, and by adapting (MET-S5-3) a first guard time at a beginning of said first time signal (TS1) and at an end of said first time signal (TS1), and
   - modulating (MET-S6) said at least one second plurality of subcarriers (PS2) according to at least one second parameter set for obtaining at least one second time signal (TS2) by applying (MET-S6-1) at least one second discrete Fourier transformation having at least one second size, by filtering (MET-S6-2) using at least one second filter module (TE-FIL-MOD2) having at least one second filter length, and by adapting (MET-S6-3) at least one second guard time at a beginning of said at least one second time signal (TS2) and at an end of said at least one second time signal (TS2).

2. Method (MET) according to claim 1, wherein either said first discrete Fourier transformation is applied before said filtering by said first filter module (TE-FIL-MOD1) and said at least one second discrete Fourier transformation is applied before said filtering by said at least one second filter module (TE-FIL-MOD2) or said first discrete Fourier transformation is applied after said filtering by said first filter module and said at least one second discrete Fourier transformation is applied after said filtering by said at least one second filter module.

3. Method (MET) according to any of the preceding claims, wherein a selection of said first parameter set and/or a selection of said at least one second parameter set depends on at least one of following operating conditions:

   - a synchronization precision of said transmitter apparatus (T-APP),
   - a transmission performance of a radio link from said transmitter apparatus (T-APP) to a receiver apparatus configured to receive said multicarrier signal,
   - a velocity between said transmitter apparatus (T-APP) and said receiver apparatus,
   - a proportion between a size of first transmission resources for transmitting said first data and a size of at least second transmission resources for transmitting said at least second data,
   - a time delay spread between a first propagation path of said multicarrier signal from said transmitter apparatus (T-APP) to said receiver apparatus and at least one second propagation path of said multicarrier signal from said transmitter apparatus (T-APP) to said receiver apparatus.

4. Method (MET) according to claim 3, wherein a robustness of said first time signal (TDS1) against transmission errors and/or a robustness of said at least one second time signal (TDS2) against transmission errors is increased, when at least one of following conditions is fulfilled:

- said synchronization precision of said transmitter apparatus (T-APP) is below a predefined time synchronization precision or below a predefined frequency synchronization precision,
- said transmission performance of said radio link is below a predefined transmission performance,
- said velocity is above a predefined velocity,
- said size of said first transmission resources is below a predefined size of transmission resources,
- said proportion between said size of first transmission resources for transmitting said first data and said size of said at least second transmission resources for transmitting said at least second data is above a predefined proportion,
- said time delay spread is above a predefined time delay spread.

5. Method (MET) according to any of the preceding claims, wherein said first size of said first discrete Fourier transformation is given by a first predefined integer number, wherein said first filter length is given by a first predefined plurality of filter coefficients, wherein said first guard time is given by a first predefined number of zero-amplitude samples inserted at a beginning of said first time signal (TS1) and an end of said first time signal (TS1), wherein said at least second size of said at least one second discrete Fourier transformation is given by at least one second predefined integer number, wherein said at least one second filter length is given by at least one second predefined plurality of filter coefficients, wherein said at least one second guard time is given by at least one second predefined number of zero-amplitude samples inserted at a beginning of said at least one second time signal (TS2) and an end of said at least one second time signal (TS2).

6. Method (MET) according to any of the preceding claims, wherein at least one of said first size of said first discrete Fourier transformation and of said at least one second size of said at least one second discrete Fourier transformation is set to a first Fourier transformation value $N_1$, wherein at least one of said first filter length and of said at least one second filter length is set to a first filter length value $L_1$ and wherein at least one of said first guard time and of said at least one second guard time is equal to half of a first guard time value $A_1$ when a velocity of said transmitter apparatus (T-APP) is below a predefined value and wherein said at least one of said first size of said first discrete Fourier transformation and of said at least one second size of said at least one second discrete Fourier transformation is set to a second Fourier transformation value $N_2$ being a fraction of said first Fourier transformation value, wherein said at least one of said first filter length and of said at least one second filter length is set to a second filter length value $L_2$ being a fraction of said first filter length value and wherein said at least one of said first guard time and of said at least one second guard time is equal to half of a second guard time value $A_2$, when said velocity of said transmitter apparatus (T-APP) is equal to or above said predefined value.

7. Method (MET) according to claim 6, wherein said first Fourier transformation value $N_1$, said first filter length value $L_1$, said first guard time value $A_1$, said second Fourier transformation value $N_2$, said second filter length value $L_2$, and said second guard time value $A_1$ fulfill equation $0.5 \cdot (N_1+L_1+A_1)=N_2+L_2+A_2$.

8. Method (MET) according to any of the preceding claims 1 to 5, wherein said first parameter set and said at least one second parameter set are selected to generate said at least one second time signal (TS2) being less sensitive with respect to transmission errors than said first time signal (TS1).

9. Method (MET) according to claim 8, wherein said first data are user data and wherein said at least second data are control data.

10. Method (MET) according to claim 8 or claim 9, wherein said first size of said first discrete Fourier transformation is set to a first Fourier transformation value $N_1$, wherein said first filter length is set to a first filter length value $L_1$, wherein said first guard time is equal to half of a first guard time value $A_1$, wherein said at least one second size of said at least one second discrete Fourier transformation is set to a second Fourier transformation value $N_2$ smaller than said first Fourier transformation value $N_1$, wherein said at least one second filter length is set to a second filter length value $L_2$ larger than said first filter length value $L_1$, wherein said at least one second guard time is equal to half of at least one second guard time value $A_2$ larger than said first guard time value $A_1$, and wherein said first Fourier transformation value $N_1$, said first filter length value $L_1$, said first guard time value $A_1$, said at least one second Fourier transformation value $N_2$, said at least one second filter length value $L_2$, and said at least one second guard time value $A_2$ fulfill equation $N_1 + L_1 + A_1 = N_2 + L_2 + A_2$, when a difference between a size of first transmission resources for transmitting said first data and a size of at least second transmission resources for transmitting said at least second data is equal to or above a predefined difference value orwherein said size of said first discrete Fourier transformation is set to a first Fourier transformation value $N_1$, wherein said first filter length is set to a first filter length value $L_1$, wherein said first guard time is equal to half of a first guard time value $A_1$, wherein said at least one second size of said at least one second discrete Fourier transformation is set to at least one second Fourier transformation value $N_2$ smaller than said first Fourier transformation value $N_1$, wherein said at least one second filter length is set to at least one second filter length value $L_2$ larger than said first filter length value $L_1$, wherein said second guard time is equal to half of at least one second guard time value $A_2$ larger than said first guard time value $A_1$, and wherein said first Fourier transformation value $N_1$, said first filter value $L_1$, said first guard time value $A_1$, said at least one second Fourier transformation value $N_2$, said at least one second filter length value $L_2$, and said at least one second guard time value $A_1$ fulfill equation $N_1 + L_1 + A_1 = N_2 + L_2 + A_2$, when said difference between said size of said first transmission resources for transmitting said first data and said size of said at least second transmission resources for transmitting said at least second data is below said predefined difference value.

11. Method (MET) according to claim 10, wherein said first guard time value $A_1$ is set to zero.

12. Method (MET) according to claim 6 or claim 10, wherein said first size of said first discrete Fourier transformation and said at least one second size of said at least one second discrete Fourier transformation are selected in such a way that a single fast Fourier transformation on received signals of said first time signal (TS1) and said at least one second time signal (TS2) can be performed by a receiver apparatus configured to receive said first time signal (TS1) and said at least one second time signal (TS2).

13. Method (MET) according to claim 12, wherein said first Fourier transformation value $N_1$, said at least one second Fourier transformation value $N_2$, a first integer w, a second integer $x$, a third integer $y$, and a fourth integer z fulfill equation $w \cdot N_1 = x \cdot N_2 = y \cdot 2^z$.

14. Method (MET) according to any of the preceding claims, wherein said multicarrier signal is a universal filtered multicarrier signal or a filter bank multicarrier signal.

15. A transmitter apparatus (T-APP) for generating a multicarrier signal comprising:

- a composer module (CMP-MOD) configured to compose said multicarrier signal comprising a first plurality of subcarriers (PS1) carrying first data and comprising at least one second plurality of subcarriers (PS2) carrying at least second data,
- a first modulator module (MOD-MOD1) configured to modulate said first plurality of subcarriers (PS1) according to a first parameter set for obtaining a first time signal (TS1) by applying a first discrete Fourier transformation having a first size, by filtering using a first filter module (TE-FIL-MOD1) having a first filter length, and by adapting a first guard time at a beginning of said first time signal (TS1) and at an end of said first time signal (TS1), and
- at least one second modulator module (MOD-MOD2) configured to modulate said at least one second plurality of subcarriers (PS2) according to at least one second parameter set for obtaining at least one second time signal (TS2) by applying at least one second discrete Fourier transformation having at least one second size, by filtering using at least one second filter module (TE-FIL-MOD2) having at least one second filter length, and by adding at least one second guard time at a beginning of said at least one second time signal (TS2) and at an end of said at least one second time signal (TS2).

MET

MET-S1    START

Verifying operation conditions

MET-S2

Determining parameters for time signal generation

MET-S3a

Transmitting parameters for time signal generation

MET-S3b

Receiving parameters
for time signal generation

MET-S4

Composing multicarrier signal

MET-S5-1

First discrete Fourier transformation

MET-S5

MET-S5-2

Filtering first time signal

Modulating
first plurality of
subcarriers

MET-S5-3

Adapting first guard time to first time
signal

MET-S6-1

Second discrete Fourier transformation

MET-S6

MET-S6-2

Filtering second time signal

Modulating
at least one
second plurality of
subcarriers

MET-S6-3

Adapting 2nd guard time to 2nd time signal

END

*FIG. 1*

FIG. 2

FIG. 3

*FIG. 4*

FIG. 5

FIG. 6

*FIG. 7*

Europäisches
Patentamt

European
Patent Office

Office européen
des brevets

# EUROPEAN SEARCH REPORT

Application Number

EP 14 30 6514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHAICH FRANK ET AL: "Waveform contenders for 5G - OFDM vs. FBMC vs", 2014 6TH INTERNATIONAL SYMPOSIUM ON COMMUNICATIONS, CONTROL AND SIGNAL PROCESSING (ISCCSP), IEEE, 21 May 2014 (2014-05-21), pages 457-460, XP032627152, DOI: 10.1109/ISCCSP.2014.6877912 [retrieved on 2014-08-13] * figure 1 * * page 460, left-hand column * ----- | 1-15 | INV. H04L25/03 H04L27/26 |
| A | EP 1 942 623 A1 (SIEMENS NETWORKS GMBH & CO KG [DE]) 9 July 2008 (2008-07-09) * paragraph [[0007]] * ----- | 1 | |
| A | EP 0 869 647 A2 (LUCENT TECHNOLOGIES INC [US]) 7 October 1998 (1998-10-07) * page 4, line 4 - line 7 * ----- | 1 | |
| A | FRANK SCHAICH ET AL: "Waveform Contenders for 5G - Suitability for Short Packet and Low Latency Transmissions", 2014 IEEE 79TH VEHICULAR TECHNOLOGY CONFERENCE (VTC SPRING), 1 May 2014 (2014-05-01), pages 1-5, XP055173006, DOI: 10.1109/VTCSpring.2014.7023145 ISBN: 978-1-47-994482-8 * page 2, right-hand column * ----- | 10 | TECHNICAL FIELDS SEARCHED (IPC) H04L |

The present search report has been drawn up for all claims

| Place of search | Date of completion of the search | Examiner |
|---|---|---|
| Berlin | 28 April 2015 | Douglas, Ian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 001 624 A1**

## ANNEX TO THE EUROPEAN SEARCH REPORT
## ON EUROPEAN PATENT APPLICATION NO.

EP 14 30 6514

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2015

| Patent document cited in search report | | Publication date | Patent family member(s) | | Publication date |
|---|---|---|---|---|---|
| EP 1942623 | A1 | 09-07-2008 | NONE | | |
| EP 0869647 | A2 | 07-10-1998 | DE | 69806670 D1 | 29-08-2002 |
| | | | DE | 69806670 T2 | 27-02-2003 |
| | | | EP | 0869647 A2 | 07-10-1998 |
| | | | JP | 3712522 B2 | 02-11-2005 |
| | | | JP | H10303849 A | 13-11-1998 |
| | | | US | 6175550 B1 | 16-01-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Waveform contenders for 5G - suitability for short packet and low latency transmissions. **SCHAICH, F. ; WILD, T. ; CHEN, Y.** proceedings of IEEE Veh. Technol. Conf. Spring, May 2014
- **WILD, T. ; SCHAICH, F. ; CHEN, Y.** 5G Air Interface Design based on Universal Filtered (UF-)OFDM. *proceedings of DSP14, Hongkong,* August 2014

- Waveform contenders for 5G - suitability for short packet and low latency transmissions. **SCHAICH, F. ; WILD, T. ; CHEN, Y.** proceedings of IEEE Veh. Technol. Conf. Spring. Spring